# EUROPEAN PATENT SPECIFICATION

(11) **EP 3 215 400 B1**
(45) Date of publication and mention of the grant of the patent: **24.06.2020**
(21) Application number: 15790917.7
(22) Date of filing: 03.11.2015
(51) Int. Cl.: B60R 1/12

(54) **METHOD FOR OPERATING A DRIVER ASSISTANCE SYSTEM OF A MOTOR VEHICLE, DRIVER ASSISTANCE SYSTEM AND MOTOR VEHICLE**
VERFAHREN ZUM BETREIBEN EINES FAHRERASSISTENZSYSTEMS EINES KRAFTFAHRZEUGS, FAHRERASSISTENZSYSTEM UND KRAFTFAHRZEUG
PROCÉDÉ DE FONCTIONNEMENT DE SYSTÈME D'AIDE À LA CONDUITE DE VÉHICULE À MOTEUR, SYSTÈME D'AIDE À LA CONDUITE ET VÉHICULE À MOTEUR

(30) Priority: 04.11.2014 DE 102014116037
(43) Date of publication of application: 13.09.2017
(73) Proprietor: Connaught Electronics Ltd., Tuam, County Galway (IE)
(72) Inventor: HUGHES, Ciáran, Kinvara County Galway (IE); WARD, Enda, Peter, Corofin County Galway (IE); DERGAN, Brian, Michael, Thomas, Galway City County Galway (IE)
(74) Representative: Jauregui Urbahn, Kristian
(86) International application number: PCT/EP2015/075582
(87) International publication number: WO 2016/071332

(56) References cited:
- DE-A1-102004 045 103
- DE-A1-102005 025 387
- DE-A1-102010 013 357
- US-A1- 2014 032 100

## Description

The invention relates to a method for operating a driver assistance system of a motor vehicle according to claim 1.

Methods for operating a driver assistance system of a motor vehicle, in which a rear image of an environmental region of the motor vehicle located substantially next to and/or behind the motor vehicle is captured by means of at least one camera of an electronic rearview mirror of the driver assistance system are known from the prior art. Thus, in the electronic rearview mirror, the rear image is provided by means of the camera, which is for example disposed in the position of a conventional mirror of the motor vehicle, and output on the display device, for example one or more displays. Now, in contrast to the conventional wing mirror with a light reflective mirror, an image of the environmental region next to or on the side of and/or behind the motor vehicle is displayed to the driver on the display device in the motor vehicle. Usually, then, the conventional mirrors are omitted. The electronic rearview mirror is also referred to as eMirror. As a further embodiment of the electronic rearview mirror, an electronic wing mirror or an electronic exterior mirror is known, which displays an environment, which would be captured by a conventional wing mirror or a conventional exterior mirror, on the display device. In addition, as another embodiment, an electronic rearview mirror is known, which displays an environment that would be detected by a conventional rearview mirror on the display device.

It is the object of the invention to provide a method, a driver assistance system as well as a motor vehicle, by which or in which the electronic wing mirror can be particularly effectively used.

According to the invention, this object is solved by a method, by a driver assistance system as well as by a motor vehicle having the features according to the respective independent claims.

In a method according to the invention for operating a driver assistance system of a motor vehicle, in which a rear image of an environmental region of the motor vehicle located substantially next to and/or behind the motor vehicle is captured by at least one camera of an electronic rearview mirror of the driver assistance system, and the rear image is displayed on a display device in the motor vehicle. According to the invention, it is provided that at least one road marking of a roadway is recognized in the environmental region based on the captured rear image.

By the method according to the invention, it becomes possible to recognize the road markings in the rear image. The road marking is preferably a longitudinal marking. In particular, the road marking bounds lanes of the roadway. The road marking, also roadway marking or ground marking, is a color identification on the surface of traffic areas of the road traffic. The road marking is associated with the road equipment and thus also with the roadway and serves for traffic guidance, the identification of various traffic areas and as a traffic sign. Thus, in particular lane delimitation on the side of the motor vehicle is effected by the road marking. The road marking can describe a roadway boundary or edge line and/or a lane boundary or solid line or safety line and/or a lane separator. Thus, the motor vehicle can be more reliably and/or more precisely moved by the additional recognition of at least one road marking.

Preferably, the rear image is captured reflection-mirrorless and therefore without a reflection mirror. An electronic rearview mirror replaces the light reflecting mirror surface of a conventional rearview mirror, be it a wing mirror on the side of the motor vehicle or a rearview mirror on the headliner of the motor vehicle. An electronic rearview mirror captures or films an area of the motor vehicle located behind the driver by means of a camera in the described manner and presents the camera images by means of a display device, for example a screen, in the field of view of the driver. Thus, the motor vehicle has no particular side mirrors or rearview mirrors, which reflect light toward the driver. In particular, the rear image is only captured electronically. Preferably, it is provided that the rear image is captured by a camera which is constructed as at least one lateral camera of an electronic wing mirror, and the rear image is displayed on the display device in the motor vehicle. Advantageous is the use of the lateral camera because it is already present due to the electronic wing mirror.

In particular, it is provided that a lateral distance from a longitudinal axis of the motor vehicle to the at least one road marking is determined based on the at least one recognized road marking. By the lateral distance, it can be determined if the motor vehicle is within a lane of the roadway. Furthermore, it can be determined, in which position the motor vehicle is located within the lane. Based on the lateral distance, thus, it can be determined if the motor vehicle has exited the lane and/or if the motor vehicle is about to exit the lane. Thus, it is advantageous that an increased safety of the motor vehicle can be provided.

Preferably, it is provided that a lateral speed, with which the motor vehicle approaches the at least one recognized road marking, is determined based on the at least one recognized road marking. Thus, the lateral speed describes, with which transverse speed the motor vehicle approaches the at least one recognized road marking. By the lateral speed, it can be determined, which period of time is left until the motor vehicle reaches or traverses the at least one recognized road marking. Thus, the motor vehicle can thereby be particularly safely moved within the lane.

Furthermore, it is provided that a period of time left until traversing the road marking by the motor vehicle is determined depending on the determined lateral speed. Based on the period of time, it can be determined, which time is left to a driver of the motor vehicle for example to alter a direction of travel of the motor vehicle by a corresponding steering movement in order that the traversing of the road marking or exiting the lane can be prevented. Thus, a particularly high safety in moving the motor vehicle is again advantageous because staying in the lane can be particularly reliably monitored.

Preferably, it is provided that a number of lanes of the roadway are determined based on the at least one recognized road marking. In this manner, the position of the motor vehicle on the roadway can be more accurately determined. The lane or a traffic lane identifies the area, which is available to the motor vehicle for driving in one direction. The width of the lane varies for example between 2.75 meters and 3.75 meters. The lane is mostly identified by roadway markings such as the road marking or roadway boundary or lane boundary or lane separator. Thus, additional information about the roadway contributing to safe movement of the motor vehicle is advantageous.

In a further development, it is provided that a current position of the motor vehicle with respect to the at least two lanes of the roadway is determined based on the at least one recognized road marking. The current position of the motor vehicle can then be provided to other units of the motor vehicle. Thus, this information of the current position can for example be compared and made plausible with data from other sources, for example sensors or other cameras, respectively. Thus, it is advantageous that the current position can be particularly precisely and/or reliably determined with respect to at least two lanes of the roadway.

Furthermore, it is provided that the determined, current position of the motor vehicle is provided to a navigation apparatus of the motor vehicle. This is advantageous because the navigation apparatus, in particular a navigation apparatus with a global navigation satellite system (GNSS), usually is equipped with an absolute GPS system and thus has an accuracy ± 10 meters in the position. This accuracy can be improved based on the determined, current position of the motor vehicle. Thus, the one determined lane can be exactly assigned to the motor vehicle and thus provide improved navigation with the navigation apparatus. The navigation apparatus can earlier inform a driver of the motor vehicle about a required driving maneuver based on the information about the determined, current position.

Furthermore, the motor vehicle is preferably at least semi-autonomously maneuvered depending on the at least one recognized road marking. The at least semi-autonomous maneuvering of the motor vehicle has the advantage that the driver of the motor vehicle can for example be relieved of a steering intervention and/or braking intervention and/or an intervention in a drive device. By the at least semi-autonomous maneuvering, the safety of the motor vehicle can increase. Furthermore, fully autonomous maneuvering of the motor vehicle can be provided if the driver carries out neither the steering intervention nor the acceleration intervention and the braking intervention. The fully autonomous driving or maneuvering also has the advantage that the movement of the motor vehicle can be safer carried out because for example human failure or human inattention can be excluded.

In particular, it is provided that a driver of the motor vehicle is warned of exiting the lane by means of the evaluation device depending on the at least one recognized road marking. The evaluation device can be a component of a lane departure warning system, which warns the driver of the motor vehicle of exiting the lane. Herein, different optical systems and computing devices can be employed, with the aid of which the position of the motor vehicle in the lane is determined. The lane departure warning system warns upon falling below the distance to the road marking or lane marking (Distance to Line Crossing criterion (DLC)) and can pre-calculate this shortfall with the aid of the Time to Line Crossing criterion (TLC). The lane departure warning system can be realized in different manner. Thus, the motor vehicle can be about to traverse the road marking, and a warning beep and/or a rattling sound is emitted or the steering wheel is vibrated. Thus, the warning can be acoustically and/or visually and/or haptically effected. It can also be that a steering intervention is performed by the driver assistance system to prevent unintended exiting the lane.

According to the invention a front image of an environmental region of the motor vehicle located substantially in front of the motor vehicle is provided by means of a front camera of the motor vehicle. For example, the front camera can be located behind a rearview mirror or behind the windshield of the motor vehicle and can be oriented forward with respect to the motor vehicle. Thus, the front camera captures the environmental region, which is in front of the motor vehicle or in forward direction of travel of the motor vehicle. It is advantageous that additional information about the roadway in the form of the front image is provided by the front camera. In this manner, the environment of the motor vehicle can be reliably captured.

It is provided that the at least one road marking is additionally determined based on the front image. The determination of the road marking based on the front image results in a particularly reliable recognition. The at least one road marking can thus be determined based on the rear image and based on the front image. Hereby, erroneous determinations of the road marking can be avoided because the results of the front image and of the rear image can be compared to each other and be verified, respectively. The front camera is directed in the direction of travel of the motor vehicle, and thus a current direction of travel or a travel trajectory of the motor vehicle can be predicted. Based on the travel trajectory, for example, it can then be predicted when the motor vehicle traverses the road marking.

Preferably, it is provided that a lighting situation of the roadway is acquired by means of the driver assistance system and the at least one road marking is recognized depending on the acquired lighting situation in the rear image and/or the front image. Thus, the rear image can for example be fused with the front image. With reflections or mirroring on the surface of the roadway due to low sun and/or wetness, it can for example be difficult to recognize the road marking based on the front image. In this case, the rear image can be used to recognize the road marking. This is helpful because the rear image is captured with the at least one lateral camera, which can be oriented substantially opposite to the front camera. Thus, the low sun then for example does not shine from the front onto the front camera, but the low sun shines from behind onto the at least one lateral camera. However, the inverse case can also be possible if the low sun shines from behind onto the motor vehicle and thus the rear image seems to be unsuitable to recognize the road marking, thus, the front image can be used to better recognize the road marking. The lane recognition or the recognition of the road marking can thus be particularly reliably and/or particularly accurately carried out. Thus, the lighting situation describes the incidence of sunlight and/or of light of another traffic participant and/or of a road infrastructure facility.

A driver assistance system according to the invention for a motor vehicle includes at least one camera and an evaluation device, which is adapted to perform a method according to the invention.

The evaluation device can be present as a separate component of the driver assistance system or the evaluation device can be integrated in the camera.

A motor vehicle according to the invention, in particular a passenger car, includes a driver assistance system according to the invention.

The preferred embodiments presented with respect to the method according to the invention and the advantages thereof correspondingly apply to the driver assistance system according to the invention as well as to the motor vehicle according to the invention.

Further features of the invention are apparent from the claims, the figures and the description of figures. The features and feature combinations mentioned above in the description as well as the features and feature combinations mentioned below in the description of figures and/or shown in the figures alone are usable not only in the respectively specified combination, but also in other combinations or alone, without departing from the scope of the invention. Thus, implementations are also to be considered as encompassed and disclosed by the invention, which are not explicitly shown in the figures and explained, but arise from and can be generated by separated feature combinations from the explained implementations.

Below, embodiments of the invention are explained in more detail based on schematic drawings.

There show:
- Fig. 1: in schematic plan view an embodiment of a motor vehicle according to the invention with a driver assistance system including a left lateral camera, a right lateral camera and a front camera;
- Fig. 2: in schematic plan view the motor vehicle according to the invention on a schematically illustrated roadway; and
- Fig. 3: in schematic plan view the motor vehicle according to the invention on the schematically illustrated roadway with four lanes.

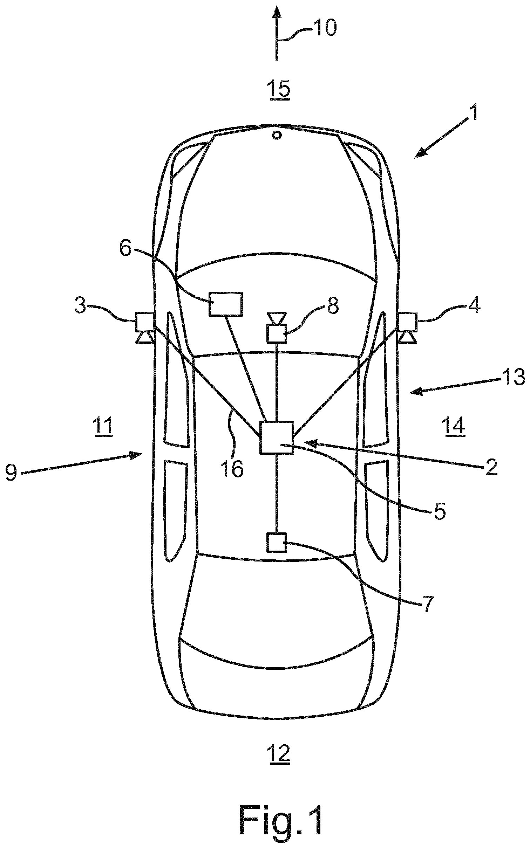

In Fig. 1, a plan view of a motor vehicle 1 with a driver assistance system 2 according to an embodiment of the invention is schematically illustrated. The driver assistance system 2 includes a left lateral camera 3 and a right lateral camera 4 in the embodiment. Furthermore, the driver assistance system 2 includes an evaluation device 5, a display device 6, a navigation apparatus 7 as well as a front camera 8.

The left lateral camera 3 is attached to a left side 9 of the motor vehicle 1 such that it is oriented opposite to a forward direction of travel 10 of the motor vehicle 1 and captures a left environmental region 11 of the motor vehicle 1 and a rear environmental region 12 of the motor vehicle 1. The right lateral camera 4 is disposed on a right side 13 of the motor vehicle 1 and is also oriented opposite to the forward direction of travel 10. Thus, the right lateral camera 4 captures a right environmental region 14 of the motor vehicle 1 and the rear environmental region 12.

The display device 6 is disposed in a front area of the driver's cab of the motor vehicle 1, but can also be arbitrarily disposed in the motor vehicle 1. The display device 6 can include one or more screens. Thus, a rear image of the left lateral camera 3 can for example be displayed on a left screen of the display device 6, while a rear image of the right lateral camera 4 is displayed on a right screen of the display device 6.

The left lateral camera 3, the right lateral camera 4 and the display device 6 together constitute an electronic rearview mirror, which can also be referred to as eMirror. This electronic rearview mirror can be used alternatively or additionally to the wing mirrors of the motor vehicle 1. Thus, the electronic rearview mirror captures the left environmental region 11 and/or the rear environmental region 12 and/or the right environmental region 14 by means of the left lateral camera 3 and/or the right lateral camera 4 and provides this information on the display device 6.

According to the embodiment of Fig. 1, the evaluation device 5 is disposed centrally in the motor vehicle 1, but can be arbitrarily disposed in the motor vehicle 1. The evaluation device 5 can for example be a controller of the motor vehicle 1. The evaluation device 5 for example includes a digital signal processor. The navigation apparatus 7 can also be arbitrarily disposed in the motor vehicle 1. For example, the navigation apparatus 7 is based on a global navigation satellite system (GNSS), to which a GPS system and/or a Glonass system and/or a Galileo system and/or a Beidou system belong.

According to the embodiment of Fig. 1, the front camera 8 is disposed behind a rearview mirror of the motor vehicle 1. However, similarly, the front camera 8 can also be arbitrarily disposed in the motor vehicle 1 if a front environmental region 15 of the motor vehicle 1 can then be captured.

The left lateral camera 3, the right lateral camera 4, the evaluation device 5, the display device 6, the navigation apparatus 7 and the front camera 8 are connected to each other by a bus system 16 of the motor vehicle 1 for data transfer.

The left lateral camera 3 and/or the right lateral camera 4 and/or the front camera 8 can be a CMOS camera or else a CCD camera or any image capturing device, by which the rear image and/or a front image of the front camera 8 can be provided. The left lateral camera 3 and/or the right lateral camera 4 and/or the front camera 8 can also be a video camera, which continuously provides a sequence of frames.

According to the embodiment of Fig. 1, the motor vehicle 1 includes the electronic rearview mirror and no conventional wing mirror, which provides the left environmental region 11 and/or the rear environmental region 12 and/or the right environmental region 14 by means of a mirror in particular to the driver of the motor vehicle. However, the motor vehicle 1 can be also equipped with the conventional wing mirror in addition to the electronic wing mirror.

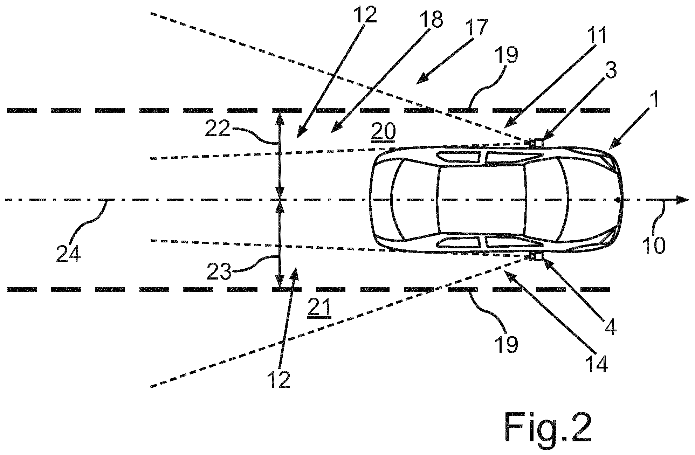

Fig. 2 shows the motor vehicle 1 on a roadway 17. The roadway 17 has a lane 18. The lane 18 is separated from adjacent lanes by means of a road marking 19. The left lateral camera 3 provides a left field of view 20, which extends over the left environmental region 11 and the rear environmental region 12. Analogously thereto, the right lateral camera 4 provides a right field of view 21, which extends at least partially over the right environmental region 14 and the rear environmental region 12.

In the left field of view 20 and/or the right field of view 21, now, the road marking 19 is recognized based on the respective rear image by means of the evaluation device 5. Based on the road marking 19, a left lateral distance 22 and/or a right lateral distance 23 can be determined. The left lateral distance 22 extends perpendicularly from a longitudinal axis 24 of the motor vehicle 1 to the road marking 19, which is disposed to the left of the motor vehicle 1. The right lateral distance 23 extends perpendicularly from the longitudinal axis 24 to the road marking 19, which is disposed to the right of the motor vehicle 1.

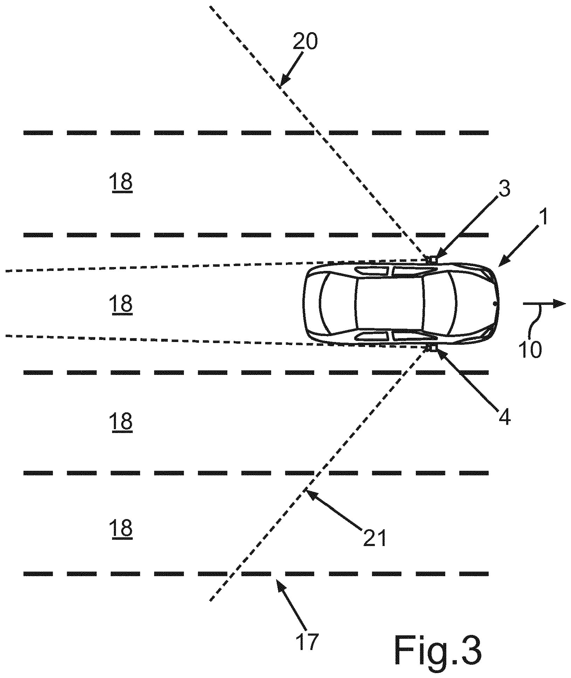

Fig. 3 shows the motor vehicle 1 on the roadway 17 with four lanes 18. Furthermore, the left field of view 20 and the right field of view 21 are shown. Thus, the evaluation device 5 is adapted to determine the left lateral distance 22 and/or the right lateral distance 23 based on the road marking 19. Based on the left lateral distance and/or the right lateral distance 23, a remaining period of time or a TTC (Time to Crossing) can be determined, which remains until traversing the road marking 19. The at least one recognized road marking for example serves for a lane departure warning system (LDW), which warns a driver of the motor vehicle 1 of exiting the lane 18. For example, the driver can be acoustically and/or visually and/or haptically warned.

Furthermore, a current position of the motor vehicle 1 with respect to at least two of the lanes 18 - as shown in Fig. 3 - can be determined by means of the evaluation device 5. This current position can be passed to the navigation apparatus 7 to assist a navigation of the driver and/or at least semi-automatic navigation of the motor vehicle 1.

The warning of the driver can be output if the lateral distance 22, 23 falls below a predetermined limit value.

Furthermore, the right lateral camera 4 and/or the left lateral camera 3, which each provide the rear image, and the front camera 8, which provides the front image, can be collectively used. Thus, the rear image and the front image can be fused to each other to recognize the road marking 19 by means of the evaluation device 5. Additionally or alternatively, a lighting situation of the roadway 17 can be determined by the evaluation device 5 and it can use the rear image and/or the front image for recognizing the road marking 19 depending thereon.

## Claims

1. Method for operating a driver assistance system (2) of a motor vehicle (1), in which a rear image of an environmental region (11, 12, 14) of the motor vehicle (1) located substantially next to and/or behind the motor vehicle (1) is captured by at least one camera (3, 4) of an electronic rearview mirror of the driver assistance system (2), the camera (3, 4) being attached at the left and/or right side of the motor vehicle (1) oriented opposite to a forward direction of travel (10) of the motor vehicle (1) and the rear image is displayed on a display device (6) in the motor vehicle (1), and
a front image of an environmental region (15) of the motor vehicle (1) located substantially in front of the motor vehicle (1) is provided by means of a front camera (8) of the motor vehicle (1)
**characterized in that**
at least one road marking (19) of a roadway (17) is recognized in the environmental region (11, 12, 14) based on the captured rear image and the at least one road marking (19) is additionally determined based on the front image while the results of the front image and of the rear image being compared to each other to be verified.

2. Method according to claim 1,
**characterized in that**
the rear image is captured reflection-mirrorless.

3. Method according to claim 1 or 2,
**characterized in that**
a lateral distance (22, 23) from a longitudinal axis (24) of the motor vehicle (1) to the at least one road marking (19) is determined based on the at least one recognized road marking (19).

4. Method according to any one of the preceding claims,
**characterized in that**
a lateral speed, with which the motor vehicle (1) approaches the at least one recognized road marking (19), is determined based on the at least one recognized road marking (19).

5. Method according to claim 4,
**characterized in that**
a period of time left until traversing the road marking (19) by the motor vehicle (1) is determined depending on the determined lateral speed.

6. Method according to any one of the preceding claims,
**characterized in that**
a number of lanes (18) of the roadway (17) is determined based on the at least one recognized road marking (19).

7. Method according to any one of the preceding claims,
**characterized in that**
a current position of the motor vehicle (1) with respect to at least two lanes (18) of the roadway (17) is determined based on the at least one recognized road marking (19).

8. Method according to claim 7,
**characterized in that**
the determined, current position of the motor vehicle (1) is provided to a navigation apparatus (7) of the motor vehicle (1).

9. Method according to any one of the preceding claims,
**characterized in that**
the motor vehicle (1) is at least semi-autonomously maneuvered depending on the at least one recognized road marking (19).

10. Method according to any one of the preceding claims,
**characterized in that**
a driver of the motor vehicle (1) is warned of exiting a lane (18) of the roadway (17) depending on the at least one recognized road marking (19).

11. Method according to any one of the preceding claims,
**characterized in that**
a lighting situation of the roadway (17) is acquired by means of the driver assistance system (2) and the at least one road marking (19) is recognized depending on the acquired lighting situation in the rear image and/or the front image.

12. Driver assistance system (2) with a camera (3, 4) and with an evaluation device (5) adapted for performing a method according to any one of the preceding claims.

13. Motor vehicle (1) with a driver assistance system (2) according to claim 12.

## Patentansprüche

1. Verfahren zum Betreiben eines Fahrerassistenzsystems (2) eines Kraftfahrzeugs (1), bei dem ein Rückbild eines im Wesentlichen neben und/oder hinter dem Kraftfahrzeug (1) liegenden Umgebungsbereichs (11, 12, 14) des Kraftfahrzeugs (1) durch mindestens eine Kamera (3, 4) eines elektronischen Rückspiegels des Fahrerassistenzsystems (2) erfasst wird, wobei die Kamera (3, 4) an der linken und/oder rechten Seite des Kraftfahrzeugs (1) entgegengesetzt zu einer Vorwärtsfahrtrichtung (10) des Kraftfahrzeugs (1) angebracht ist und das Rückbild auf einer Anzeigevorrichtung (6) im Kraftfahrzeug (1) angezeigt wird, und ein Frontbild eines im Wesentlichen vor dem Kraftfahrzeug (1) liegenden Umgebungsbereichs (15) des Kraftfahrzeugs (1) mittels einer Frontkamera (8) des Kraftfahrzeugs (1) bereitgestellt wird,
**dadurch gekennzeichnet, dass**
mindestens eine Fahrstreifenmarkierung (19) einer Fahrbahn (17) in dem Umgebungsbereich (11, 12, 14) anhand des erfassten Rückbildes erkannt wird und die mindestens eine Fahrstreifenmarkierung (19) zusätzlich basierend auf dem Frontbild bestimmt wird, wobei die Ergebnisse des Frontbildes und des Rückbildes zum Verifizieren miteinander verglichen werden.

2. Verfahren nach Anspruch 1,
**dadurch gekennzeichnet, dass**
das Rückbild reflexionsspiegelfrei erfasst wird.

3. Verfahren nach Anspruch 1 oder 2,
**dadurch gekennzeichnet, dass**
ein seitlicher Abstand (22, 23) von einer Längsachse (24) des Kraftfahrzeugs (1) zu der mindestens einen Fahrstreifenmarkierung (19) basierend auf der mindestens einen erkannten Fahrstreifenmarkierung (19) bestimmt wird.

4. Verfahren nach einem der vorhergehenden Ansprüche,
**dadurch gekennzeichnet, dass**
eine Quergeschwindigkeit, mit der sich das Kraftfahrzeug (1) der mindestens einen erkannten Fahrstreifenmarkierung (19) nähert, basierend auf der mindestens einen erkannten Fahrstreifenmarkierung (19) bestimmt wird.

5. Verfahren nach Anspruch 4,
**dadurch gekennzeichnet, dass**
abhängig von der ermittelten Quergeschwindigkeit eine verbleibende Zeitspanne bis zum Überfahren der Fahrstreifenmarkierung (19) durch das Kraftfahrzeug (1) bestimmt wird.

6. Verfahren nach einem der vorhergehenden Ansprüche,
**dadurch gekennzeichnet, dass**
eine Anzahl von Fahrstreifen (18) der Fahrbahn (17) basierend auf mindestens einer erkannten Fahrstreifenmarkierung (19) bestimmt wird.

7. Verfahren nach einem der vorhergehenden Ansprüche,
**dadurch gekennzeichnet, dass**
eine aktuelle Position des Kraftfahrzeugs (1) in Bezug auf mindestens zwei Fahrstreifen (18) der Fahrbahn (17) basierend auf der mindestens einen erkannten Fahrstreifenmarkierung (19) bestimmt wird.

8. Verfahren nach Anspruch 7,
**dadurch gekennzeichnet, dass**
die bestimmte aktuelle Position des Kraftfahrzeugs (1) einem Navigationsgerät (7) des Kraftfahrzeugs (1) bereitgestellt wird.

9. Verfahren nach einem der vorhergehenden Ansprüche,
**dadurch gekennzeichnet, dass**
das Kraftfahrzeug (1) mindestens halbautonom abhängig von mindestens einer erkannten Fahrstreifenmarkierung (19) gelenkt wird.

10. Verfahren nach einem der vorhergehenden Ansprüche,
**dadurch gekennzeichnet, dass**
ein Fahrer des Kraftfahrzeugs (1) vor dem Verlassen eines Fahrstreifens (18) der Fahrbahn (17) abhängig von mindestens einer erkannten Fahrstreifenmarkierung (19) gewarnt wird.

11. Verfahren nach einem der vorhergehenden Ansprüche,
**dadurch gekennzeichnet, dass**
eine Beleuchtungssituation der Fahrbahn (17) mittels des Fahrerassistenzsystems (2) erfasst wird und die mindestens eine Fahrstreifenmarkierung (19) abhängig von der erfassten Beleuchtungssituation im Rück- und/oder Frontbild erkannt wird.

12. Fahrerassistenzsystem (2) mit einer Kamera (3, 4) und mit einer Auswertungsvorrichtung (5), die dazu angepasst ist, ein Verfahren nach einem der vorhergehenden Ansprüche durchzuführen.

13. Kraftfahrzeug (1) mit einem Fahrerassistenzsystem (2) nach Anspruch 12.

## Revendications

1. Procédé d'exploitation d'un système d'aide à la conduite (2) d'un véhicule à moteur (1), dans lequel une image arrière d'une région environnante (11, 12, 14) du véhicule à moteur (1), située substantiellement à côté du et/ou derrière le véhicule à moteur (1), est capturée par au moins une caméra (3, 4) d'un rétroviseur électronique du système d'aide à la conduite (2), la caméra (3, 4) étant attachée sur le côté gauche et/ou droit du véhicule à moteur (1), orientée à l'opposé d'un sens de la marche avant (10) du véhicule à moteur (1), et l'image arrière est affichée sur un dispositif d'affichage (6) dans le véhicule à moteur (1), et une image avant d'une région environnante (15) du véhicule à moteur (1), située substantiellement devant le véhicule à moteur (1), est fournie au moyen d'une caméra avant (8) du véhicule à moteur (1),
**caractérisé en ce qu'**au moins un marquage routier (19) d'une chaussée (17) est reconnu dans la région environnante (11, 12, 14) sur la base de l'image arrière capturée, et ledit au moins un marquage routier (19) est de plus déterminé sur la base de l'image avant tandis que les résultats de l'image avant et de l'image arrière sont comparés l'un à l'autre pour être vérifiés.

2. Procédé selon la revendication 1, **caractérisé en ce que** l'image arrière est capturée sans miroir de réflexion.

3. Procédé selon la revendication 1 ou 2, **caractérisé en ce qu'**une distance latérale (22, 23) par rapport à un axe longitudinal (24) du véhicule à moteur (1) jusqu'audit au moins un marquage routier (19) est déterminée sur la base dudit au moins un marquage routier (19) reconnu.

4. Procédé selon l'une quelconque des revendications précédentes, **caractérisé en ce qu'**une vitesse latérale, avec laquelle le véhicule à moteur (1) s'approche dudit au moins un marquage routier (19) reconnu est déterminée sur la base dudit au moins un marquage routier (19) reconnu.

5. Procédé selon la revendication 4, **caractérisé en ce qu'**une période de temps restant jusqu'au passage du marquage routier (19) par le véhicule à moteur (1) est déterminée en fonction de la vitesse latérale déterminée.

6. Procédé selon l'une quelconque des revendications précédentes, **caractérisé en ce qu'**un nombre de voies (18) de la chaussée (17) est déterminé sur la base dudit au moins un marquage routier (19) reconnu.

7. Procédé selon l'une quelconque des revendications précédentes, **caractérisé en ce qu'**une position actuelle du véhicule à moteur (1) par rapport à au moins deux voies (18) de la chaussée (17) est déterminée sur la base dudit au moins un marquage routier (19) reconnu.

8. Procédé selon la revendication 7, **caractérisé en ce que** la position actuelle déterminée du véhicule à moteur (1) est fournie à un appareil de navigation (7) du véhicule à moteur (1).

9. Procédé selon l'une quelconque des revendications précédentes, **caractérisé en ce que** le véhicule à moteur (1) est manœuvré de manière au moins semi-autonome en fonction dudit au moins un marquage routier (19) reconnu.

10. Procédé selon l'une quelconque des revendications précédentes, **caractérisé en ce qu'**un conducteur du véhicule à moteur (1) est alerté du fait qu'il sort d'une voie (18) de la chaussée (17) en fonction dudit au moins un marquage routier (19) reconnu.

11. Procédé selon l'une quelconque des revendications précédentes, **caractérisé en ce qu'**une situation d'éclairage de la chaussée (17) est acquise au moyen du système d'aide à la conduite (2), et ledit au moins un marquage routier (19) est reconnu en fonction de la situation d'éclairage acquise sur l'image arrière et/ou l'image avant.

12. Système d'aide à la conduite (2) avec une caméra (3, 4) et avec un dispositif d'évaluation (5) adapté pour effectuer un procédé selon l'une quelconque des revendications précédentes.

13. Véhicule à moteur (1) avec un système d'aide à la conduite (2) selon la revendication 12.
